(19) Europäisches Patentamt
European Patent Office
Office européen des brevets

(11) Publication number: **0 182 113**
**A1**

(12)
# EUROPEAN PATENT APPLICATION

(21) Application number: **85113297.7**

(51) Int. Cl.[4]: **C 08 F 12/12**

(22) Date of filing: **19.10.85**

(30) Priority: **29.10.84 US 665682**

(43) Date of publication of application: **28.05.86**
**Bulletin 86/22**

(84) Designated Contracting States: **BE DE FR GB**

(71) Applicant: **U.S. Peroxygen Company, 850 Morton Avenue, Richmond California94804 (US)**

(72) Inventor: **Peterson, David, 109 Goldenrod Drive, Hercules California 94547 (US)**

(74) Representative: **Reitzner, Bruno, Dr. et al, Patentanwälte Dipl.-Ing. R. Splanemann Dr. B. Reitzner Tal 13, D-8000 München 2 (DE)**

(54) **Co-initiator composition and process for P-methylstyrene polymerization.**

(57) p-Methylstyrene is polymerized in the presence of a high-temperature initiator and a low-temperature initiator, the latter being restricted to monosecondary peroxy esters of the formula

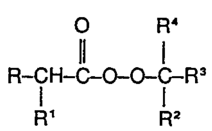

and disecondary peroxy esters of the formula

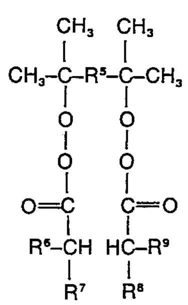

in which $R^5$ is ethylene or ethynylene and the other R's are alkyl or alkenyl. Within this restricted group, the results upon polymerization are a generally higher molecular weight, a narrow molecular weight distribution and a shorter reaction time.

EP 0 182 113 A1

# CO-INITIATOR COMPOSITION AND PROCESS FOR P-METHYLSTYRENE POLYMERIZATION

## BACKGROUND AND SUMMARY OF THE INVENTION

This invention relates to the polymerization of para-methylstyrene, and particularly to an improvement in known processes for such polymerization whereby an increase in the polymerization rate is achieved, together with a higher molecular weight product and a narrower molecular weight distribution.

Since its development, poly-paramethylstyrene has gained increasing popularity over its earlier-developed analog polystyrene, due to superior physical and processing properties. These include a lower vapor pressure, higher flash point, lower density and higher softening point, as well as the fact that its starting monomer, p-methylstyrene, is fabricated from a less expensive raw material, i.e., toluene as opposed to benzene.

Both styrene and p-methylstyrene are known to be best polymerized in the presence of a combination of free radical initiators, particularly peroxides. The combination consists of a high-temperature peroxide (i.e., one which decomposes to the free radical form at relatively high temperatures) and a low-temperature peroxide (one which decomposes at the same rate at lower temperatures). A wide range of combinations has been suggested, although the most commonly used is t-butylperoxybenzoate (high) and benzoyl peroxide (low, also known as dibenzoyl peroxide).

It has now been discovered that certain low-temperature peroxide initiators are unique among the wide range of species heretofore generally disclosed in terms of their ability to produce a polymer of high molecular weight and narrow molecular weight distribution

when applied to p-methylstyrene, and to do so in a relatively short period of time. Since high molecular weight and narrow molecular weight distribution are considered beneficial in certain applications, this subclass of low-temperature species provides a distinct advantage in p-methylstyrene polymerization. The faster reaction time further provides an economic benefit.

## DETAILED DESCRIPTION OF THE INVENTION

The class of low-temperature peroxide initiators demonstrating the unusual behavior which is the subject of this invention are

(a) monosecondary peroxy esters having the structural formula

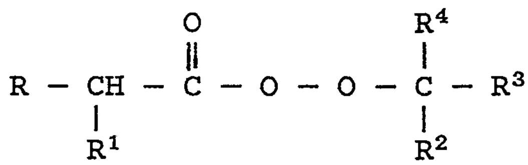

(I)

and

(b) disecondary peroxy esters having the structural formula

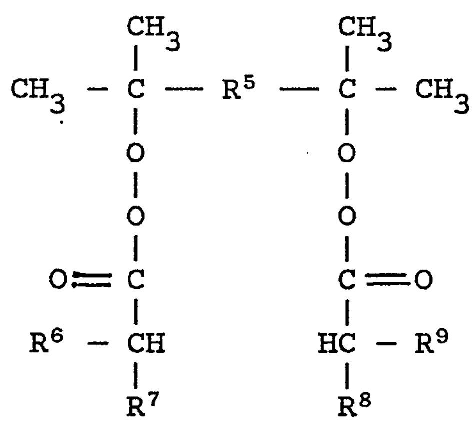

(II)

in which R, $R^1$, $R^2$, $R^3$, $R^4$, $R^6$, $R^7$, $R^8$ and $R^9$ are straight-chain or branched-chain alkyl or alkenyl groups of up to 12 carbon atoms each, and $R^5$ is either ethylene ($-CH_2-CH_2-$) or ethynylene ($-C \equiv C-$).

Within the scope of the above formulae, certain embodiments are preferred, namely those in which R,

$R^1$-$R^4$ and $R^6$-$R^9$ are alkyl, particular $C_1$-$C_6$ alkyl; those of Formula I in which R and $R^1$ collectively contain up to 10 carbon atoms and $R^2$, $R^3$ and $R^4$ collectively contain up to 8 carbon atoms; and those of Formula II in which $R^5$ is ethylene, $R^6$ and $R^7$ collectively contain up to 10 carbon atoms, $R^8$ and $R^9$ collectively contain up to 10 carbon atoms, and the formula is symmetrical.

Examples of monosecondary peroxy esters of Formula I are:

| Name | R | $R^1$ | $R^2$ | $R^3$ | $R^4$ |
|---|---|---|---|---|---|
| t-butyl peroxy-2-ethylhexanoate | $C_4H_9$ | $C_2H_5$ | $CH_3$ | $CH_3$ | $CH_3$ |
| t-butyl peroxy isobutyrate | $CH_3$ | $CH_3$ | $CH_3$ | $CH_3$ | $CH_3$ |
| t-amyl peroxy-2-ethylhexanoate | $C_4H_9$ | $C_2H_5$ | $CH_3$ | $CH_3$ | $C_2H_5$ |
| 1,1,3,3-tetramethyl butyl peroxy-2-ethylbutyrate | $C_2H_5$ | $C_2H_5$ | $CH_3$ | $CH_3$ | 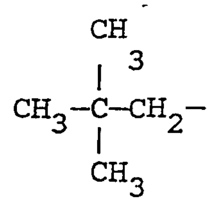 |
| t-hexyl peroxy-2-methylpentanoate | $C_3H_7$ | $CH_3$ | $CH_3$ | $CH_3$ | $C_3H_7$ |

Examples of disecondary peroxy esters of Formula II are:

| Name | $R^5$ | $R^6$ | $R^7$ | $R^8$ | $R^9$ |
|---|---|---|---|---|---|
| 2,5-di(2-ethyl-hexanoylperoxy)-2,5-dimethyl-hexane | $CH_2$-$CH_2$ | $C_2H_5$ | $C_4H_9$ | $C_2H_5$ | $C_4H_9$ |
| 2,5-di(2-methyl-hexanoylperoxy)-2,5-dimethylhexane | $CH_2$-$CH_2$ | $CH_3$ | $C_4H_9$ | $CH_3$ | $C_4H_9$ |
| 2,5-di(2-ethyl-hexanoylperoxy)-2,5-dimethyl-hexyne-3 | C≡C | $C_2H_5$ | $C_4H_9$ | $C_2H_5$ | $C_4H_9$ |

In accordance with the known methods, one or more of these peroxy esters is used in combination with

a high temperature peroxy initiator to promote the polymerization or copolymerization of p-methylstyrene. The terms "low temperature initiator" and "high temperature initiator" are used herein in accordance with their accepted meanings in the free radical literature. The temperature characteristic of each is conveniently expressed in terms of the ten-hour half-life temperature, i.e., the temperature at which the initiator is 50% decomposed in ten hours. Low-temperature initiators are generally those whose ten-hour half-life temperatures are below 90°C, preferably (for purposes of the present invention) from about 60°C to about 80°C, as determined in benzene. High-temperature initiators are generally those whose ten-hour half-life temperatures are about 90°C or above, preferably from about 90°C to about 120°C, in the same solvent.

The high temperature initiators used in conjunction with the low temperature initiators of Formulae I and II above are not critical. Indeed, the unusual results attainable according to the present invention are achieved using a wide variety of species as the high temperature peroxides, including both monofunctional and difunctional species. The various types suitable for use include t-alkyl peroxybenzoates, t-alkyl diperoxybenzoates, t-alkyl peroxycarbonates and di(t-alkylperoxy)ketals. Specific examples are:

t-Butyl peroxybenzoate
t-Butyl peroxy-2-methylbenzoate
t-Amyl peroxy-2-methylbenzoate
t-Butyl peroxy-2-ethylhexylcarbonate
t-Amyl peroxy-2-ethylhexylcarbonate
2,5-Dimethyl-2,5-di(benzoylperoxy)hexane
1,1-Di(t-butylperoxy)cyclohexane
t-Butyl peroxyacetate
t-Amyl peroxyisononoate
t-Butyl peroxyisopropylcarbonate
t-Butyl peroxy-n-octylcarbonate

Preferred high-temperature initiators are t-alkyl peroxybenzoates and t-alkyl diperoxybenzoates.

The remaining process parameters are generally in accord with the prior art. The ratio of high temperature to low temperature initiators, for example, is not critical and may vary, although for most applications a ratio in the range of about 0.2 to about 5.0 (high to low), determined on the basis of moles of peroxy functional group, will provide the best results. The preferred range is from about 0.5 to about 2.0. Similarly, the amounts of each initiator may vary, with amounts in the range of from about $0.5 \times 10^{-4}$ to about $30 \times 10^{-4}$ moles of peroxy functional group per 100 grams of p-methylstyrene, preferably from about $2 \times 10^{-4}$ to about $15 \times 10^{-4}$ moles per 100 grams, providing the best results.

During polymerization, the reaction mixture is generally in the form of a suspension in water, aided by a suspending agent and surfactant as well as additional additives commonly used in this and similar reactions. The reaction temperature is not critical, although in most cases it lies within the range of about 80°C to about 150°C, preferably from about 90°C to about 130°C.

While the present invention is applicable to both homopolymerization and copolymerization of p-methylstyrene, homopolymerization is preferred. Small amounts of other methylstyrene isomers may be present in the monomer mixture.

EXAMPLE 1

Pop bottles of 6.5-ounce (192-milliliter) capacity were charged with 50g each of a suspension solution consisting of 0.004g surfactant (Dow 2A1, Dow Chemical Co., Midland, Michigan), 0.0255g $Na_2CO_3$, 0.398g $Na_3PO_4$, and 2.0g 17.7% $CaCl_2$, with water as the balance. To each suspension solution was added 25g p-methylstyrene monomer (Mobil Chemical Co., Petrochemicals Div., New

York, New York) including a dual initiator system. A variety of initiator combinations were used, the low temperature initiator in some of the combinations being benzoyl peroxide and in others either t-butylperoxy-2-ethylhexanoate or 2,5-dimethyl-2,5-di(2-ethylhexanoylperoxy)hexane, the latter two initiators being within the scope of the present invention. The amount of each initiator used, both high and low temperature, was $9.08 \times 10^{-4}$ moles per 100g of monomer for monofunctional peroxy compounds and $4.54 \times 10^{-4}$ moles per 100 g of monomer for difunctional peroxy compounds.

The bottles were flushed with nitrogen, capped and rotated in a 100°C bath for the desired polymerization time, then cooled, acidified, filtered, washed and dried at 50°C for two hours.

Residual monomer was determined by gas-liquid chromatography on a Hewlett-Packard 5830A gas chromatograph with a 10-foot by 1/8-inch column packed with 15% QF-1 and 3% XE-60 on Chromosorb W. The sample was prepared by dissolving 1g of polymer and 0.05g of t-butyl benzene (an internal standard) in 20ml of benzene. The oven temperature was 100°C. Polymerization time to 99% conversion was determined by interpolating the results of residual monomer analysis from bottles pulled from the bath at several different times. The sample chosen for molecular weight measurements was that closest to 99.5% conversion.

The weight average molecular weight, Mw, and the number average molecular weight, Mn, were determined by gel permeation chromatography on a Varian 5000 liquid chromatograph. Two 30-cm columns, 4000H and GMH6-TSK (Alltech Associates), were used, with tetrahydrofuran as solvent and polystyrene molecular weight standards.

The results are shown in Table I.

TABLE I

P-METHYLSTYRENE POLYMERIZATION TEST RESULTS

| High Temperature Initiator | Low Temperature Initiator | Hours For 99% Conversion | Mw | Mn | Mw/Mn |
|---|---|---|---|---|---|
| t-Butyl Peroxybenzoate | Benzoyl Peroxide | 7.0 | 465,300 | 99,500 | 4.68 |
| | t-Butyl Peroxy-2-ethylhexanoate | 6.3 | 509,300 | 110,600 | 4.60 |
| | 2,5-Dimethyl-2,5-di(2-ethylhexanoyl-peroxy)hexane | 6.8 | 525,800 | 124,100 | 4.24 |
| 2,5-Dimethyl 2,5-Di(benzoyl-peroxy)hexane | Benzoyl Peroxide | 6.5 | 448,900 | 98,600 | 4.55 |
| | t-Butyl Peroxy-2-ethylhexanoate | 6.4 | 511,500 | 113,300 | 4.51 |
| t-Butyl Peroxy-2-methyl-benzoate | Benzoyl Peroxide | 6.2 | 445,300 | 94,000 | 4.74 |
| | t-Butyl Peroxy-2-ethylhexanoate | 5.8 | 497,800 | 111,900 | 4.45 |
| | 2,5-Dimethyl-2,5-di(2-ethylhexanoyl-peroxy)hexane | <5 | 510,500 | 118,600 | 4.30 |
| t-Amyl Peroxy-2-methyl benzoate | Benzoyl Peroxide | <5 | 399,400 | 89,200 | 4.48 |

TABLE I (Continued)

| High Temperature Initiator | Low Temperature Initiator | Hours For 99% Conversion | Mw | Mn | Mw/Mn |
|---|---|---|---|---|---|
| t-Butyl Peroxy-2-ethylhexylcarbonate | Benzoyl Peroxide | 7.0 | 454,200 | 98,100 | 4.63 |
| t-Amyl Peroxy-2-ethylhexylcarbonate | Benzoyl Peroxide | 5.0 | 418,600 | 94,400 | 4.43 |
| 1,1-Di(t-butylperoxy)cyclohexane | Benzoyl Peroxide | 10.9 | 450,300 | 97,400 | 4.65 |
| t-Butyl Peroxyacetate | Benzoyl Peroxide | 8.7 | 428,300 | 91,300 | 4.69 |
| t-Amyl Peroxyisononoate | Benzoyl Peroxide | 7.8 | 415,600 | 90,000 | 4.62 |
| t-Butyl Peroxyisopropylcarbonate | Benzoyl Peroxide | 9.6 | 449,000 | 94,900 | 4.73 |
| t-Butyl Peroxy-n-octylcarbonate | Benzoyl Peroxide | 7.4 | 447,200 | 96,900 | 4.62 |

The data in this table demonstrate that low-temperature initiators within the scope of this invention provide a substantial increase in reaction rate (lower number of hours for achieving 99% conversion), higher molecular weights in terms of both weight average and number average, and a more narrow molecular weight distribution as indicated by the ratio of weight average (Mw) to number average (Mn) molecular weights. These trends are all consistent in each of the direct comparisons, and generally evident in the comparisons where different high-temperature initiators were used, particularly in the molecular weight figures.

EXAMPLE 2

To further demonstrate the surprising nature of the present invention, the following data on styrene polymerization is presented. Polymerization of styrene has been more widely investigated than p-methylstyrene polymerization. Due to their structural similarity, one would expect the two monomers to behave similarly in the presence of free radical initiators. The following demonstrates the contrary.

The procedure of Example 1 was followed using, however, freshly distilled styrene in place of p-methylstyrene. A range of initiator combinations similar to that used in Example 1 was used, although in lesser amounts — $4.12 \times 10^{-4}$ moles of each per 100g of monomer for monofunctional peroxy compounds and $2.06 \times 10^{-4}$ moles per 100g for difunctional peroxy compounds.

The results are shown in Table II.

TABLE II

STYRENE POLYMERIZATION TEST RESULTS

| High Temperature Initiator | Low Temperature Initiator | Hours For 99% Conversion | Mw | Mn | Mw/Mn |
|---|---|---|---|---|---|
| t-Butyl Peroxybenzoate | Benzoyl Peroxide | 9.5 | 599,100 | 183,100 | 3.27 |
| t-Butyl Peroxy-2-methyl-benzoate | Benzoyl Peroxide | 7.8 | 577,100 | 172,300 | 3.35 |
| t-Amyl Peroxy-2-methyl-benzoate | Benzoyl Peroxide | 6.7 | 533,200 | 156,100 | 3.42 |
| t-Butyl Peroxybenzoate | t-Butyl Peroxy-2-ethylhexanoate | 10.2 | 624,600 | 206,000 | 3.03 |
| t-Butyl Peroxybenzoate | 2,5-Dimethyl-2,5-di(2-ethylhexanoyl-peroxy)hexane | 10.5 | 676,500 | 229,300 | 2.95 |

The data in this table indicate that the last two low temperature initiators, which fall within Formulas I and II above, respectively, actually gave slower polymerization times, rather than faster as they did with p-methylstyrene (compare Table I). The uniqueness of these low temperature initiators in connection with p-methylstyrene polymerization is thus even more unexpected.

# C L A I M S

1. A process for the polymerization and copolymerization of p-methylstyrene in the presence of an organic peroxide co-initiator composition comprising a combination of a high temperature initiator and a low temperature initiator, characterized in that said low temperature initiator is a member selected from the group consisting of:

(a) monosecondary peroxy esters having the formula

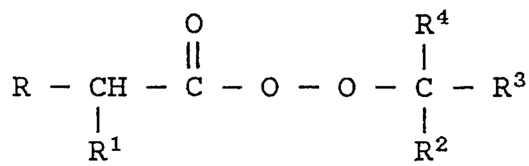

in which R, $R^1$, $R^2$, $R^3$ and $R^4$ are independently straight-chain or branched-chain $C_1$-$C_{12}$ alkyl or $C_2$-$C_{12}$ alkenyl; and

(b) disecondary peroxy esters having the formula

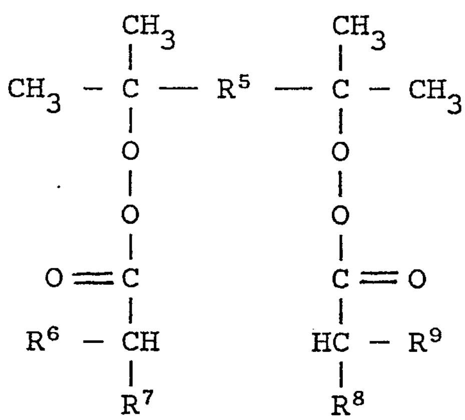

in which $R^5$ is $-CH_2-CH_2-$ or $-C{\equiv}C-$, and $R^6$, $R^7$, $R^8$ and $R^9$ are independently straight-chain or branched-chain $C_1$-$C_{12}$ alkyl or $C_2$-$C_{12}$ alkenyl.

2. The process of claim 1 in which R, $R^1$, $R^2$, $R^3$, $R^4$, $R^6$, $R^7$, $R^8$ and $R^9$ are each alkyl, preferably $C_1$ - $C_6$ alkyl.

3. The process of claims 1 or 2 in which said low temperature initiator is selected from the group consisting of said monosecondary peroxy esters, R and $R^1$ are each alkyl and collectively contain up to 10 carbon atoms, $R^2$, $R^3$ and $R^4$ are each alkyl and collectively contain up to 8 carbon atoms; $R^6$ and $R^7$ are each alkyl and collectively contain up to 10 carbon atoms and $R^8$ and $R^9$ are each alkyl and collectively contain up to 10 carbon atoms.

4. The process of anyone of claims 1 to 3, in which said low temperature initiator is selected from the group consisting of said disecondary peroxy esters, and $R^5$ is $-CH_2-CH_2-$.

5. The process of anyone of claims 1 - 4, in which said high temperature initiator is a member selected from the group consisting of t-alkyl peroxybenzoates, t-alkyl diperoxybenzoates, t-alkyl peroxycarbonates, and di(t-alkylperoxy)ketals; R and $R^1$ are independently $C_1$-$C_6$ alkyl and collectively contain up to 10 carbon atoms; $R^2$, $R^3$ and $R^4$ are independently $C_1$-$C_6$ alkyl and collectively contain up to 8 carbon atoms; $R^5$ is $-CH_2-CH_2-$; $R^6$ and $R^7$ are independently $C_1$-$C_6$ alkyl and collectively contain up to 10 carbon atoms; and $R^8$ and $R^9$ are independently $C_1$-$C_6$ alkyl and collectively contain up to 10 carbon atoms.

6. The process of anyone of claims 1 - 5, in which said high temperature initiator is a member selected from the group consisting of t-alkylperoxybenzoates and t-alkyl diperoxybenzoates; and said low temperature initiator is t-butyl peroxy-2-ethylhexanoate, or 2,5-di (2-ethylhexanoylperoxy)-2,5-dimethylhexane.

7. The process of anyone of claims 1 - 6, in which the ratio of high temperature initiator to low temperature initiator based on moles of peroxy functional group is from about 0,2 to about 5.0, preferably from about 0,5 to about 2.0.

8. The process of anyone of claims 1 - 7, in which the amount of each said initiator is from about $0.5 \times 10^{-4}$ to about $30 \times 10^{-4}$ moles, preferably from about $2 \times 10^{-4}$ to about $15 \times 10^{-4}$ moles of peroxy functional group per 100 grams of p-methylstyrene.

9. An organic peroxide co-initiator composition for the polymerization and copolymerization of p-methylstyrene comprising a high temperature initiator and a low temperature initiator, characterized in that said high temperature initiator and said low temperature initiator are defined as in anyone of claims 1 - 6.

10. The composition of claim 9, in which the ratio of high temperature initiator to low temperature initiator based on moles of peroxy functional group is from about 0.2 to about 5.0, preferably from about 0.5 to about 2.0.

European Patent Office

0182113

# EUROPEAN SEARCH REPORT

Application number

EP 85 11 3297

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 084 715 (MOBIL OIL)<br>* Claim 1 *<br>--- | 1-10 | C 08 G 12/12 |
| Y | US-A-4 057 567 (R.L. FRIEDMAN)<br>* Claim 1 *<br>--- | 1-10 | |
| Y | GB-A-1 127 075 (ARGUS)<br>* Claim 1 *<br>----- | 1-10 | |
| | | | TECHNICAL FIELDS SEARCHED (Int. Cl.4) |
| | | | C 08 F |

The present search report has been drawn up for all claims

| Place of search | Date of completion of the search | Examiner |
|---|---|---|
| THE HAGUE | 14-02-1986 | CAUWENBERG C.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82